# EUROPEAN PATENT APPLICATION

(11) **EP 4 410 575 A1**
(43) Date of publication of application: **07.08.2024**
(21) Application number: 24150342.4
(22) Date of filing: 04.01.2024
(51) Int. Cl.: B60J 1/00

(54) **VEHICLE GLASS INSTALLATION METHOD**

(30) Priority: 06.02.2023 US 202318106051
(71) Applicant: VOLVO TRUCK CORPORATION, 405 08 Göteborg (SE)
(72) Inventor: WOLCK, Daniel, Madison, North Carolina, 27025 (US)
(74) Representative: Zacco Sweden AB

(57) **Abstract**

A method of installing a vehicle glass component (200) includes positioning a spacer element (206) between the glass component (200) and a vehicle frame (302). The method further includes aligning the glass component (200) with respect to the spacer element (206) and the vehicle frame (302) to position the glass component and the spacer element in an installation position with respect to the vehicle frame, the glass component, spacer element, and vehicle frame defining a channel (324). The method further includes injecting an adhesive (304) into the channel at a sufficient pressure to fill the channel and permanently bond the glass component to the vehicle frame in the installation position.

## Description

### TECHNICAL FIELD

The disclosure relates generally to installation of vehicle components. In particular aspects, the disclosure relates to a vehicle glass installation method, and related systems and devices. The disclosure can be applied in heavy-duty vehicles, such as trucks, buses, and construction equipment, passenger vehicles, such as cars, and other vehicles. Although the disclosure may be described with respect to a particular vehicle, the disclosure is not restricted to any particular vehicle.

### BACKGROUND

Installation of vehicle glass components, such as a windshield for example, may include placement of the component in a rubber seal and/or bonding the component to a vehicle frame using a bead of adhesive. Bonding methods have some advantages over other methods, such as being less expensive, more forgiving, more watertight, and/or more durable in some applications. One drawback of bonding methods is that installation may involve careful handling and available glass geometries may be limited. This is in part because the movement of the glass component into an installation position is normally in a uniform direction, which compresses the bead of adhesive during movement.

### SUMMARY

According to a first aspect of the disclosure, a method of installing a vehicle glass component may include positioning a spacer element between the glass component and a vehicle frame. The method may further include aligning the glass component with respect to the spacer element and the vehicle frame to position the glass component and the spacer element in an installation position with respect to the vehicle frame, the glass component, spacer element, and vehicle frame defining a channel. The method may further include injecting an adhesive into the channel at a sufficient pressure to fill the channel and permanently bond the glass component to the vehicle frame in the installation position. A technical benefit may include allowing for accurate positioning of the glass component with respect to the vehicle frame before application of an adhesive.

In some examples, the channel may include a continuous channel around a perimeter of the glass component. Injecting the adhesive into the channel may include injecting a continuous bead of adhesive into the channel around the perimeter of the glass component. A technical benefit may include providing uniform adhesive application around the perimeter of the glass component.

In some examples, the spacer element may include a continuous spacer element having a perimeter smaller than the perimeter of the glass component. A technical benefit may include containing the adhesive bead entirely within the perimeter of the glass component.

In some examples, a distance between the perimeter of the spacer element and the perimeter of the glass component may be substantially uniform. A technical benefit may include providing uniform adhesive application within the perimeter of the glass component.

In some examples, the spacer element may include a plurality of openings, wherein injecting the adhesive causes the adhesive to expel air through the plurality of openings to uniformly fill the channel with the adhesive. A technical benefit may include allowing for the adhesive to be applied at an increased pressure to increase bond strength.

In some examples, the spacer element may include a plurality of spacer element sections. Positioning the spacer element may include positioning the plurality of spacer element sections within a perimeter of the glass component to define the channel. A technical benefit may include reducing bulk and volume of individual spacer element sections.

In some examples, positioning the spacer element may further include attaching the spacer element to the vehicle frame, and positioning the glass component over the spacer element. A technical benefit may include allowing for positioning of the glass component over the spacer element without the glass component contacting the frame.

In some examples, positioning the spacer element may further include attaching the spacer element to the glass component, and positioning the glass component and spacer element over the vehicle frame. A technical benefit may include allowing for positioning of the glass component over the spacer element without the glass component contacting the frame.

In some examples, the spacer element may include a rigid plastic. A technical benefit may include providing support for the glass component during and after adhesive application.

In some examples, the spacer element may include ethylene propylene diene monomer rubber (EPDM) rubber, thermoplastic elastomer (TPE), and/or polyamide nylon (PA). A technical benefit may include providing support for the glass component during and after adhesive application.

In some examples, the adhesive may include a curable waterproof adhesive. A technical benefit may include providing a waterproof seal between the glass component and the frame.

In some examples, the adhesive may include urethane, butyl, and/or silicone. A technical benefit may include providing a waterproof seal between the glass component and the frame.

In some examples, the glass component may include a vehicle windshield. A technical benefit may include providing benefits disclosed herein for a vehicle application.

According to a second aspect of the disclosure, a spacer element for installing a vehicle glass component may include a plastic ring having a perimeter smaller than a perimeter of the glass component. Positioning the plastic ring between a vehicle frame and the glass component in an installation position may define a channel extending around the perimeter of the plastic ring for receiving adhesive therein to fill the channel and permanently bond the glass component to the vehicle frame. A technical benefit may include allowing for accurate positioning of the glass component with respect to the vehicle frame before application of an adhesive. A technical benefit may include allowing for accurate positioning of the glass component with respect to the vehicle frame before application of an adhesive.

In some examples, the plastic ring may be shaped such that a distance between the perimeter of the plastic ring and the perimeter of the glass component is substantially uniform. A technical benefit may include providing uniform adhesive application within the perimeter of the glass component.

In some examples, the plastic ring may include a plurality of openings, such that receiving the adhesive in the channel causes the adhesive to expel air through the plurality of openings to uniformly fill the channel with the adhesive. A technical benefit may include allowing for the adhesive to be applied at an increased pressure to increase bond strength.

In some examples, the plastic ring may include a plurality of plastic ring sections.

In some examples, the spacer element may further include an adhesive surface to adhere the plastic ring to one of the vehicle frame and the glass component before positioning the plastic ring between the vehicle frame and the glass component in an installation position.

In some examples, the plastic ring may include a rigid plastic. A technical benefit may include providing support for the glass component during and after adhesive application.

In some examples, the spacer element may include ethylene propylene diene monomer rubber (EPDM) rubber, thermoplastic elastomer (TPE), and/or polyamide nylon (PA). A technical benefit may include providing support for the glass component during and after adhesive application.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
FIGS. 1A and 1B are exemplary views of a vehicle glass installation method according to an example.
FIG. 2 is an exemplary view of a vehicle glass component having an attached spacer element for a vehicle glass installation method according to an example.
FIGS. 3A-3C are exemplary views of a process for installing the vehicle glass component of FIG. 2 to a vehicle frame using a vehicle glass installation method according to an example.
FIGS. 4A and 4B are exemplary views of an alternative spacer element for a vehicle glass installation method according to an example.
FIG. 5 is a flow chart of operations for an exemplary vehicle glass installation method, according to one example.

### DETAILED DESCRIPTION

Aspects set forth below represent the necessary information to enable those skilled in the art to practice the disclosure.

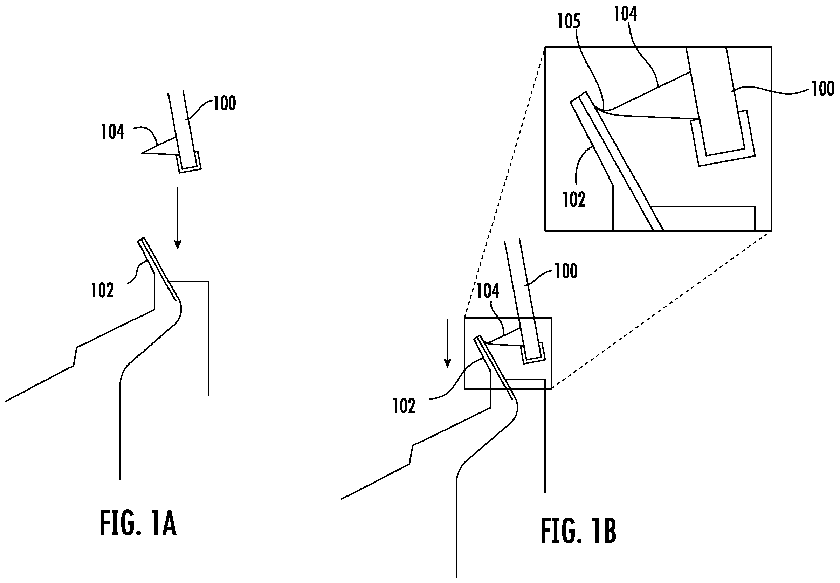

Before discussing embodiments of the disclosure, FIGS. 1A and 1B are exemplary views of a vehicle glass installation method according to an example. As shown by FIG. 1A, a triangular bead of adhesive 104 is applied to the glass component 100. As shown by FIG. 1B, the component 100 is moved toward a vehicle frame 102 to compress the adhesive therebetween to a desired degree, thereby achieving adequate coverage of the adhesive 104 on both components, with minimal entrapment of air, and with adequate pressure at the secondary bond interface 105 to permanently adhere the components to each other.

When the glass component 100 is substantially curved, however, the angle of the bonding surface at different points on the component 100 may differ from the installation direction, thereby limiting the allowable geometry that will ensure proper placement and adequate compression of the adhesive 104.

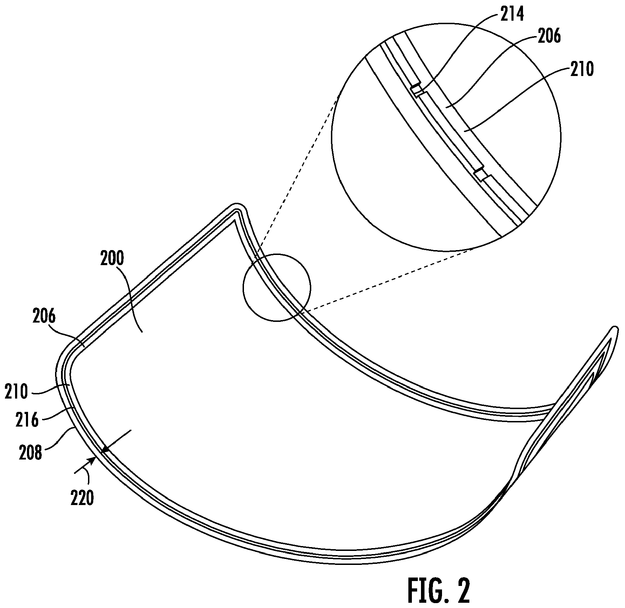

Some examples disclosed herein improve on these and other methods by allowing the glass to be positioned without any adhesive in place. As shown by FIG. 2, a vehicle glass component 200 having an attached spacer element 206 is illustrated, according to an example. The spacer element 206 extends around a perimeter 208 of the glass component, which is a curved vehicle windshield 216 in this example. As further shown by FIG. 2, the spacer element 206 is a continuous spacer element 210 having a perimeter 212 that smaller than the perimeter 208 of the glass component, such that a distance 220 between the perimeter 212 of the spacer element 206 and the perimeter 208 of the glass component 200 is substantially uniform. The spacer element 206 in this example also has a plurality of openings 214 to accommodate an adhesive and facilitate expulsion of air during installation. In this example, the spacer element 206 is attached to the vehicle glass component 200 in advance of installation, but it should be understood that the spacer element 206 can alternatively be attached to a vehicle frame in advance of installation. In this example, the spacer 206 is a rigid or semi-rigid plastic ring 218, and can be formed from any number of materials, such as dense and relatively compliant materials such as ethylene propylene diene monomer rubber (EPDM) rubber for thermoplastic elastomer (TPE), and/or harder, non-scratching plastics, such as polyamide nylon (PA).

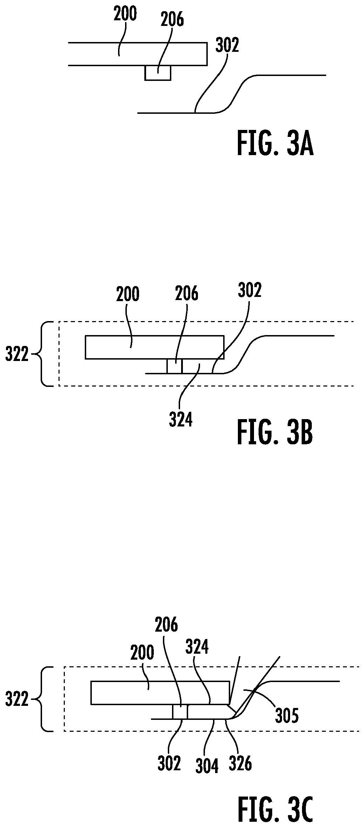

Referring now to FIGS. 3A-3C, exemplary views of a process for installing the vehicle glass component 200 of FIG. 2 to a vehicle frame 302 using a vehicle glass installation method is illustrated.

As shown by FIG. 3A, the spacer element 206 is positioned between the glass component 200 and the vehicle frame 302. As discussed above, the spacer element 206 may be attached to the glass component 200, and the glass component 200 and spacer element 206 may be positioned over the vehicle frame 302 to position the spacer element 206 therebetween. Alternatively, the spacer element 206 may be attached to the frame 302, and the glass component 200 may be positioned over the spacer element 206 to position the spacer element between the glass component 200 and the vehicle frame 302.

As shown in FIG. 3B, the glass component 200 is aligned with respect to the spacer element 206 and the vehicle frame 302 to position the glass component 200 and the spacer element 206 in an installation position 322 with respect to the vehicle frame 302, such that the glass component 200, spacer element 206, and vehicle frame 302 define a channel 324.

As shown in FIG. 3C, a bead 326 of adhesive 304 is injected into the channel 324 at a sufficient pressure to fill the channel 324 and permanently bond the glass component 200 to the vehicle frame 302 in the installation position 322. In this example, the bead 326 is a continuous bead 326 that extends around the perimeter 208 (see FIG. 2) of the glass component 200. In this example, the adhesive 306 is a curable waterproof adhesive (e.g., urethane, butyl, silicone, etc.), but it should be understood that any number of adhesives may be used, as desired.

This and other processes improve on conventional processes in several ways. For example, the vehicle glass component 200 can be positioned in place and adjusted without any adhesive 304 in place, thus avoiding messiness, smearing, and the difficulty of carefully moving every portion of the glass simultaneously through its loading path. This benefit is particularly relevant to aftermarket applications, where robots and precise assembly aids may not be available, and where glass replacement must be done on a complete vehicle in a garage or workshop setting rather than in a larger, ergonomically optimized factory setting. In addition, because the adhesive 304 is applies after the glass component 200 is positioned into the installation position 322, different types and shapes of glass may be used that may present installation difficulties using conventional techniques.

Conventional techniques may also rely on a substantial amount of overlap between the primary and secondary surfaces of the glass and frame components, e.g., to accommodate positional tolerance of the adhesive, and to account for surfaces that may deviate from an installation direction. Because the glass component 200 in the example of FIGS. 3A-3C can be positioned more precisely prior to adhesive 304 application, and because this example does not rely on moving the glass component 200 and the frame 302 with respect to each other in an installation direction, another advantage is that the amount of overlap between the glass component 200 and the vehicle frame 302 can be reduced.

In general, adequate pressure at the bond surfaces (e.g., of the vehicle glass component 200 and the vehicle frame 302) is considered to be desirable during installation, such as to increase bond strength of the adhesive 304. This pressure may be generated in conventional processes through the deformation of the adhesive from an initially triangular profile (e.g., 10mm height) to a final, rectangular profile (e.g., 5mm height), as shown above with respect to FIGS. 1A and 1B. In the example of FIGS. 3A-3C, an adhesive dispenser 305 may achieve higher pressures because the adhesive 304 is entirely captive in two dimensions, e.g., by the spacer element 206 and the dispenser 305 in an x-direction, by the glass component 200 and the vehicle frame 302 in a y-direction, and is partially captive in a third dimension, e.g., by a trailing portion of previously applied adhesive 304. The adhesive 104 in the example of FIGS. 1A and 1B on the other hand is captive in only two dimensions, e.g., between the components and along the length of the bead of the adhesive. In some examples, the adhesive 304 may be dispensed from an interior or an exterior of the vehicle. For example, different arrangements of components, body geometries, and dispensing equipment may make it advantageous to dispense the adhesive 304 in different ways.

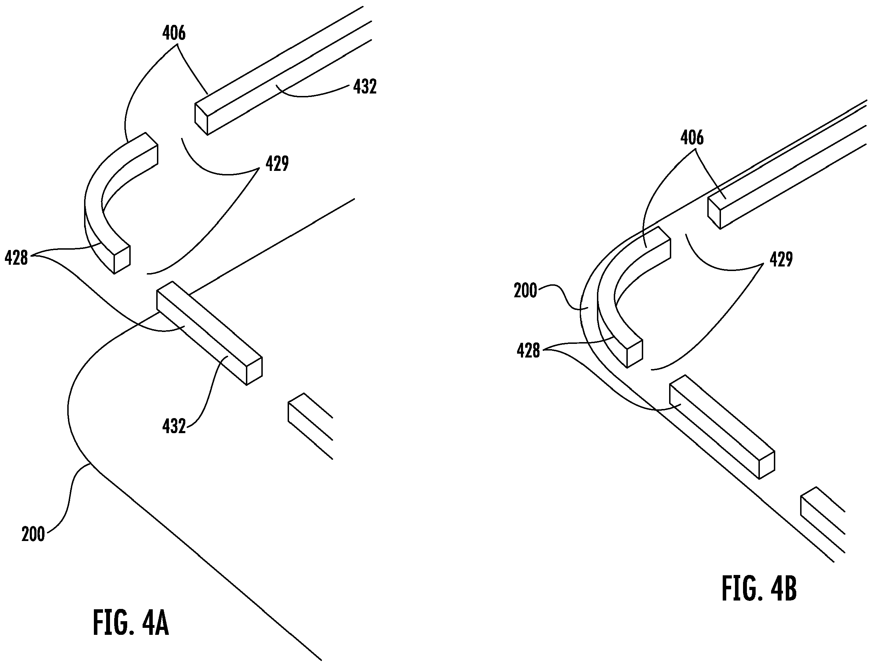

Referring now to FIGS. 4A and 4B, an exemplary view of an alternative spacer element 406 for a vehicle glass installation method is illustrated, according to an example. In the example of FIGS. 4A and 4B, the spacer element includes a plurality of spacer element sections 428, such as plastic ring sections 430 for example, extending around the perimeter 208 of the glass component 200. In this example, each spacer element section 428 has an adhesive surface 432 for adhering the spacer element section 428 to the glass component 200 before positioning the glass component 200 and the spacer element sections 428 into an installation position with respect to a vehicle frame. Alternatively, each spacer element section 428 may include an adhesive surface for adhering the spacer element section 428 to a vehicle frame, with the glass component 200 being positioned and aligned with respect to the frame and spacer element sections 428, as desired. In another example, the spacer element sections 428 may be molded directly onto the vehicle frame and/or the glass component 200. In this example, the spacer element sections 428 are arranged such that gaps 429 between the spacer element sections 428 accommodate the adhesive and facilitate expulsion of air during installation. The gaps 429 may be positioned and sized based on a number of factors, such as thickness of the spacer element sections 428, viscosity of the adhesive, etc. to optimize application pressure for the adhesive and to permit the adhesive to move into the gaps while minimizing leakage of the adhesive through the gaps 429. The gaps 429 may also facilitate installation by providing a visual indication that the adhesive pressure is sufficient, e.g., by allowing an installer to see a small amount of adhesive escaping the gap 429 on an opposite side from the channel.

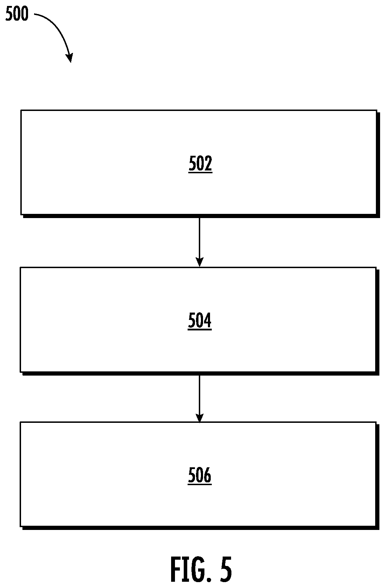

FIG. 5 is a flow chart of operations 500 for an exemplary vehicle glass installation method, according to one example. The operations 500 may positioning a spacer element (e.g., spacer element 206 of FIG. 3A) between a glass component (e.g., glass component 200) and a vehicle frame (e.g., vehicle frame 302) (Block 502).

The operations 500 may further include aligning the glass component with respect to the spacer element and the vehicle frame (e.g., as in FIG. 3B) to position the glass component and the spacer element in an installation position (e.g., installation position 322) with respect to the vehicle frame (Block 504). In this example, the glass component, spacer element, and vehicle frame define a channel (e.g., channel 324).

The operations 500 may further include injecting an adhesive (e.g., adhesive 304) into the channel (e.g., as in FIG. 3C) at a sufficient pressure to fill the channel and permanently bond the glass component to the vehicle frame in the installation position (Block 506).

Additional examples are provided below:
According to an example, a method of installing a vehicle glass component may include positioning a spacer element between the glass component and a vehicle frame. The method may further include aligning the glass component with respect to the spacer element and the vehicle frame to position the glass component and the spacer element in an installation position with respect to the vehicle frame, the glass component, spacer element, and vehicle frame defining a channel. The method may further include injecting an adhesive into the channel at a sufficient pressure to fill the channel and permanently bond the glass component to the vehicle frame in the installation position.

According to another example, the channel may include a continuous channel around a perimeter of the glass component. Injecting the adhesive into the channel may include injecting a continuous bead of adhesive into the channel around the perimeter of the glass component.

According to another example, the spacer element may include a continuous spacer element having a perimeter smaller than the perimeter of the glass component.

According to another example, a distance between the perimeter of the spacer element and the perimeter of the glass component may be substantially uniform.

According to another example, the spacer element may include a plurality of openings, wherein injecting the adhesive causes the adhesive to expel air through the plurality of openings to uniformly fill the channel with the adhesive.

According to another example, the spacer element may include a plurality of spacer element sections. Positioning the spacer element may include positioning the plurality of spacer element sections within a perimeter of the glass component to define the channel.

According to another example, positioning the spacer element may further include attaching the spacer element to the vehicle frame, and positioning the glass component over the spacer element.

According to another example, positioning the spacer element may further include attaching the spacer element to the glass component, and positioning the glass component and spacer element over the vehicle frame.

According to another example, the spacer element may include a rigid plastic.

According to another example, the spacer element may include ethylene propylene diene monomer rubber (EPDM) rubber, thermoplastic elastomer (TPE), and/or polyamide nylon (PA). According to another example,

According to another example, the adhesive may include a curable waterproof adhesive.

According to another example, the adhesive may include urethane, butyl, and/or silicone.

According to another example, the glass component may include a vehicle windshield.

According to another example, a spacer element for installing a vehicle glass component may include a plastic ring having a perimeter smaller than a perimeter of the glass component. Positioning the plastic ring between a vehicle frame and the glass component in an installation position may define a channel extending around the perimeter of the plastic ring for receiving adhesive therein to fill the channel and permanently bond the glass component to the vehicle frame.

According to another example, the plastic ring may be shaped such that a distance between the perimeter of the plastic ring and the perimeter of the glass component is substantially uniform.

According to another example, the plastic ring may include a plurality of openings, such that receiving the adhesive in the channel causes the adhesive to expel air through the plurality of openings to uniformly fill the channel with the adhesive.

According to another example, the plastic ring may include a plurality of plastic ring sections.

According to another example, the spacer element may further include an adhesive surface to adhere the plastic ring to one of the vehicle frame and the glass component before positioning the plastic ring between the vehicle frame and the glass component in an installation position.

According to another example, the plastic ring may include a rigid plastic.

According to another example, the spacer element may include ethylene propylene diene monomer rubber (EPDM) rubber, thermoplastic elastomer (TPE), and/or polyamide nylon (PA). According to another example,

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A method of installing a vehicle glass component, the method comprising:
positioning a spacer element between the glass component and a vehicle frame;
aligning the glass component with respect to the spacer element and the vehicle frame to position the glass component and the spacer element in an installation position with respect to the vehicle frame, wherein the glass component, spacer element, and vehicle frame define a channel; and
injecting an adhesive into the channel at a sufficient pressure to fill the channel and permanently bond the glass component to the vehicle frame in the installation position.

2. The method of claim 1, wherein the channel comprises a continuous channel around a perimeter of the glass component, and
wherein injecting the adhesive into the channel comprises injecting a continuous bead of adhesive into the channel around the perimeter of the glass component.

3. The method of claim 1, wherein the spacer element comprises a continuous spacer element having a perimeter smaller than the perimeter of the glass component.

4. The method of claim 3, wherein a distance between the perimeter of the spacer element and the perimeter of the glass component is substantially uniform.

5. The method of claim 1, wherein the spacer element comprises a plurality of openings, wherein injecting the adhesive causes the adhesive to expel air through the plurality of openings to uniformly fill the channel with the adhesive.

6. The method of claim 1, wherein the spacer element comprises a plurality of spacer element sections, and
wherein positioning the spacer element comprises positioning the plurality of spacer element sections within a perimeter of the glass component to define the channel.

7. The method of claim 1, wherein positioning the spacer element further comprises:
attaching the spacer element to the vehicle frame; and
positioning the glass component over the spacer element.

8. The method of claim 1, wherein positioning the spacer element further comprises:
attaching the spacer element to the glass component; and
positioning the glass component and spacer element over the vehicle frame.

9. The method of claim 1, wherein the spacer element comprises a rigid plastic.

10. The method of claim 1, wherein the spacer element comprises at least one of ethylene propylene diene monomer rubber (EPDM) rubber, thermoplastic elastomer (TPE), and polyamide nylon (PA).

11. The method of claim 1, wherein the adhesive comprises a curable waterproof adhesive.

12. The method of claim 1, wherein the adhesive comprises at least one of urethane, butyl, and silicone.

13. The method of claim 1, wherein the glass component comprises a vehicle windshield.

14. A spacer element for installing a vehicle glass component, the spacer element comprising:
a plastic ring having a perimeter smaller than a perimeter of the glass component, wherein positioning the plastic ring between a vehicle frame and the glass component in an installation position defines a channel extending around the perimeter of the plastic ring for receiving adhesive therein to fill the channel and permanently bond the glass component to the vehicle frame.

15. The spacer element of claim 14, wherein the plastic ring comprises at least one of ethylene propylene diene monomer rubber (EPDM) rubber, thermoplastic elastomer (TPE), and polyamide nylon (PA).
